# EUROPÄISCHE PATENTSCHRIFT

(11) **EP 1 519 797 B1**
(45) Veröffentlichungstag und Bekanntmachung des Hinweises auf die Patenterteilung: **01.03.2006**
(21) Anmeldenummer: 03762585.2
(22) Anmeldetag: 02.07.2003
(51) Int. Cl.: B08B 1/00, B25J 9/10, E04G 23/02

(54) **VERFAHREN ZUM REINIGEN EINES BAUTEILS UND GEEIGNETE REINIGUNGSVORRICHTUNG**
METHOD FOR CLEANING A COMPONENT AND APPROPRIATE CLEANING DEVICE
PROCEDE POUR NETTOYER UN COMPOSANT ET INSTALLATION DE NETTOYAGE ADAPTEE A CET EFFET

(30) Priorität: 04.07.2002 DE 10230021
(43) Veröffentlichungstag der Anmeldung: 06.04.2005
(73) Patentinhaber: DaimlerChrysler AG, 70567 Stuttgart (DE)
(72) Erfinder: HABISREITINGER, Uwe, 72290 Lossburg (DE); NORDMANN, Bernhard, 71034 Böblingen (DE)
(86) Internationale Anmeldenummer: PCT/EP2003/007047
(87) Internationale Veröffentlichungsnummer: WO 2004/004932

(56) Entgegenhaltungen:
- WO-A-95/04203
- DE-A- 4 221 026
- FR-A- 2 674 559
- GB-A- 2 290 463
- US-A- 5 046 211
- US-A- 5 655 247
- US-B1- 6 292 976

## Beschreibung

Die Erfindung betrifft ein Verfahren zum Reinigen mindestens einer Fläche eines Bauteils unter Einsatz einer Reinigungsvorrichtung, wobei die Bauteilfläche mittels eines von einer Positioniereinrichtung bewegbaren Reinigungskopfes gereinigt wird unter Ausbildung einer Anpresskraft des Reinigungskopfes auf das Bauteil, gemäß dem Oberbegriff des Anspruchs 1. Ferner bezieht sich die Erfindung auf eine Reinigungsvorrichtung, die zum Reinigen mindestens einer Fläche eines Bauteils dient und einen mittels einer Positioniereinrichtung bewegbaren Reinigungskopf aufweist, entsprechend dem Oberbegriff des Anspruchs 9.

Verfahren und Reinigungsvorrichtungen der eingangs genannten Art sind bekannt. Die DE 42 21 026 A1 offenbart einen Reinigungsroboter für eine Druckmaschine. Aus der EP 0 642 318 B1 ist eine Vorrichtung zum Reinigen von Fenstern bekannt, die hierzu eine Robotersteuerungseinrichtung mit einer Sensorfunktion zur Objektgeometrieerfassung aufweist. Diese bekannten Reinigungssysteme sind nachteilig, da lediglich unter verhältnismäßig großem Aufwand eine unerwünscht starke Kollision mit dem zu reinigenden Bauteil vermieden werden kann. Dabei ist es grundsätzlich möglich, die jeweilige vollständige Bauteilgeometrie genau zu ermitteln und datenmäßig an eine zugehörige Steuereinheit zu übertragen. Ferner kann mittels geeigneter Sensormittel, jedoch unter entsprechend großem apparativen und regelungstechnischen Aufwand, eine Beschädigung des Bauteils durch die Reinigungsvorrichtung während des Reinigungsvorgangs praktisch ausgeschlossen werden.

Es ist Aufgabe der Erfindung, ein Verfahren und eine geeignete Reinigungsvorrichtung der eingangs genannten Art vorzuschlagen, die eine relativ einfach steuerbare und korrekt durchführbare, automatisierte Reinigung eines Bauteils erlauben.

Zur Lösung der Aufgabe wird ein Verfahren mit den Merkmalen des Anspruchs 1 vorgeschlagen. Das erfindungsgemäße Verfahren zeichnet sich dadurch aus, dass die Positioniereinrichtung ein Grobpositioniersystem und ein Feinpositioniersystem aufweist, wobei der Reinigungskopf mittels des Feinpositioniersystems in mindestens einer Bewegungsrichtung kraftgesteuert bewegt wird.

Aufgrund der kraftgesteuerten Bewegung des Reinigungskopfes ist es möglich, die Anpresskraft mittels des Feinpositioniersystems hinsichtlich ihres Maximalwerts zu begrenzen und damit definiert vorzugeben. Dadurch wird einerseits das Auftreten unerwünscht großer Anpress- beziehungsweise Kollisionskräfte zwischen dem Reinigungskopf und dem Bauteil vermieden und andererseits ermöglicht, auch ohne Sensoren und/oder ohne eine vollständige Bauteilgeometrieerfassung, das heißt lediglich bei Kenntnis der allgemeinen beziehungsweise ungefähren Bauteilkontur, eine korrekte Reinigung des Bauteils durchzuführen, da die Reinigungsvorrichtung an die zu erwartende Bauteiltoleranz angepasst ist. Somit müssen auch Ungenauigkeiten hinsichtlich einer jeweiligen Bauteilpositionierung nicht erfasst werden, insbesondere vor Beginn des Reinigungsvorgangs, da selbige aufgrund eines federelementartigen Anpassungsverhaltens des Feinpositioniersystems infolge der kraftgesteuerten Bewegung bis zu vorgebbaren Toleranzen kompensiert werden. Somit kann der Reinigungskopf entlang wenigstens einer Bewegungsachse mittels des Feinpositioniersystems innerhalb eines vorgebbaren und somit begrenzten Toleranzfensters bewegt werden. Dabei kann die Bewegung des mit dem Bauteil in Berührungskontakt stehenden Reinigungskopfes mittels des Feinpositioniersystems unter Ausnutzung der oben genannten Vorteile alleine oder mittels gleichzeitiger Betätigung des Grobpositioniersystems und des Feinpositioniersystems erfolgen.

Mit Vorteil ist die Anpresskraft zur Reinigungsoptimierung variabel und insbesondere stufenlos einstellbar. Hierdurch kann die Anpresskraft in Abhängigkeit einer veränderlich großen, aktiven Kontaktfläche des Reinigungskopfes und/oder in Abhängigkeit eines Bauteilparameters vorgegeben werden. Somit ist es möglich, einen bauteilangepassten und reinigungsoptimierenden Anpresskraftwert mittels der Reinigungsvorrichtung zu erzeugen, wobei gegebenenfalls auch in Abhängigkeit der jeweiligen Bewegungsrichtung unterschiedlich große Anpresskraftwerte während eines Reinigungsvorgangs gewählt werden können.

Die Änderung der Anpresskraft am Feinpositioniersystem kann automatisiert oder manuell vor und/oder während des Reinigungsvorgangs erfolgen. Eine automatisierte Änderung der Anpresskraft ist beispielsweise mittels einer vorprogrammierten Steuerungseinrichtung möglich. Die Reinigungsvorrichtung ist somit durch eine besonders hohe Flexibilität in Bezug auf den Hauptparameter "Reinigungskraft" gekennzeichnet, wobei gleichzeitig bei relativ geringem Steuerungsaufwand eine betriebssichere Reinigung des Bauteils gewährleistet ist. Dabei kann der Reinigungskopf manuell mittels eines Manipulators als Positioniereinrichtung oder auch automatisiert mittels eines Roboters als Positioniereinrichtung bewegt werden. Ein Manipulator (von einer Bedienperson gesteuerter Teleoperator) erlaubt eine besonders handhabungsfreundliche und -im Vergleich zu einer direkt, das heißt unmittelbar manuell durchgeführten Abwischbewegung- ergonomisch günstige Reinigung des Bauteils.

Zur Lösung der Aufgabe wird ferner eine Reinigungsvorrichtung mit den Merkmalen des Anspruchs 9 vorgeschlagen. Die erfindungsgemäße Reinigungsvorrichtung zeichnet sich dadurch aus, dass die Positioniereinrichtung ein Grobpositioniersystem und ein Feinpositioniersystem aufweist, wobei die Bewegung des Reinigungskopfes mittels des Feinpositioniersystems wenigstens in einer Bewegungsrichtung kraftgesteuert ist. Mittels einer derartigen Reinigungsvorrichtung lassen sich die in Bezug auf das Verfahren vorerwähnten Vorteile erzielen. Ferner ist ein kraftsteuerndes Feinpositioniersystem konstruktionstechnisch verhältnismäßig einfach realisierbar. Dies gilt insbesondere bei Ausbildung des Feinpositioniersystems als maximalkraftbegrenzte Funktionseinheit. Hierzu kann das Feinpositioniersystem für mindestens eine und vorzugsweise alle bauteilkollisionsrelevanten Bewegungsrichtungen des Reinigungskopfes ein jeweils zugeordnetes Feinpositionierelement aufweisen zur bewegungsrichtungsspezifischen Vorgabe der Anpresskraft. Vorzugsweise enthält das Feinpositionierelement einen teleskopartigen Verstellmechanismus, so dass der Reinigungskopf mittels des Feinpositioniersystems entlang mindestens einer Bewegungsachse innerhalb eines vorgegebenen Toleranzfensters verschiebbar ist. Dabei ist das Toleranzfenster durch den maximalen Verstellweg des Feinpositioniersystems und/oder durch die Geometrie des Reinigungskopfes definiert. Das Feinpositionierelement ist hinsichtlich seiner maximalen Verstellkraft unter Ausbildung der Anpresskraft insbesondere stufenlos variabel einstellbar, beispielsweise mittels einer pneumatischen oder hydraulischen Betätigungseinheit. Derartige Betätigungseinheiten erlauben eine steuerungs- beziehungsweise regelungstechnisch verhältnismäßig einfache und schnelle Einstellung einer oder gegebenenfalls mehrerer, unterschiedlicher Anpresskräfte.

Mit Vorteil ist der Reinigungskopf mittels des Feinpositioniersystems entlang drei zueinander im Wesentlichen orthogonal stehender Bewegungsachsen lageverstellbar. Zusätzlich ist der Reinigungskopf vorzugsweise um mindestens eine Drehachse drehbewegbar. Dabei kann die Drehbewegung zum Beispiel mittels des Grobpositioniersystems insbesondere in Form eines Roboterarms erfolgen. Ein derart komplex bewegbarer Reinigungskopf erlaubt eine automatisierte und hinreichend genau reproduzierbare Reinigung auch von geometrisch unterschiedlich gestalteten Bauteilen, gegebenenfalls mit geeigneten Wischbewegungen. Bei vorliegenden Kollisionsmöglichkeiten mit dem Bauteil aufgrund einer Drehwischbewegung des Reinigungskopfes kann selbige auch mittels eines entsprechend kraftsteuernden Feinpositionierelements erzeugt werden, so dass auch bei einer Drehwischbewegung eine maximale Obergrenze der Anpresskraft beziehungsweise der Kollisionskraft nicht überschritten werden kann. Der Reinigungskopf kann somit für mindestens eine und vorzugsweise alle bauteilkontaktrelevanten Bewegungsrichtungen eine entsprechende Reinigungsanschlagfläche aufweisen, der ein jeweiliges Feinpositionierelement zugeordnet ist.

Gemäß einer bevorzugten Ausführungsform ist der Reinigungskopf austauschbar am Feinpositioniersystem befestigt, beispielsweise mittels eines Bajonettverschlusssystems. Hierdurch wird ein schneller Reinigungskopfwechsel, insbesondere bei einem verschmutzten Reinigungskopf, und eine -in Bezug auf den Einsatz von unterschiedlich ausgebildeten Reinigungsköpfen- flexiblere Bauteilreinigung ermöglicht.

Die Reinigungsvorrichtung kann als Manipulatoreinrichtung oder zur automatisierten Reinigung als Robotereinrichtung ausgebildet sein. Bei einer Robotereinrichtung ist die Grobpositioniereinrichtung vorzugsweise mit einem bewegbaren Roboterarm versehen, an dessen freien Ende das Feinpositioniersystem befestigt ist, das den Reinigungskopf trägt. Zur wenigstens teilweise automatisierten Positionierung des Reinigungskopfes und Reinigung des Bauteils ist die Reinigungsvorrichtung vorzugsweise mit einer programmierbaren Steuereinrichtung und/oder Regelungseinrichtung versehen.

Der Reinigungskopf weist mit Vorteil eine sich dreidimensional erstreckende Reinigungsfläche auf. Dabei kann er mindestens eine Anschlagschulter enthalten, die mit ihrer Reinigungsanschlagfläche frontal an eine Bauteilkante bewegbar ist unter Ausbildung der Anpresskraft. Besonders vorteilhaft ist die Reinigungsfläche im Wesentlichen U- oder L-förmig ausgebildet. Ferner kann die Reinigungsfläche mindestens eine mit einer Bauteilfläche in Berührungskontakt bringbare Hinterschneidung aufweisen. Somit können mittels des Reinigungskopfes vorderseitig liegende Bauteilflächen sowie hinterseitig liegende Bauteilflächen, wie zum Beispiel ein Umbugbereich einer Fahrzeugtür, in einem einzigen Wischvorgang betriebssicher und schnell gereinigt werden.

Der Reinigungskopf ist an seiner Bauteilkontaktseite vorzugsweise mit mindestens einem austauschbaren Reinigungselement versehen, wobei das Reinigungselement ein Schwamm und/oder ein Borstenelement und/oder ein Tuch und insbesondere ein Mikrofasertuch sein kann. Die Bestimmung eines geeigneten Reinigungselements kann in Abhängigkeit der jeweils zu erfüllenden Reinigungsaufgabe erfolgen, so dass die Reinigungsvorrichtung flexibel zur Lösung unterschiedlichster Reinigungsprobleme heranziehbar ist. Das Anbringen des Reinigungselements am Reinigungskopf kann dabei automatisiert oder auch manuell erfolgen.

Mit Vorteil weist die Reinigungsvorrichtung einen Speicher auf zur Zwischenlagerung mindestens eines Reinigungskopfes und/oder mindestens eines Reinigungselements. Ferner kann sie eine Reinigungskopf- und/oder Reinigungselement-Behandlungseinrich-tung aufweisen. Eine derartige Behandlungseinrichtung kann beispielsweise dazu dienen, den Reinigungskopf und/oder das Reinigungselement zu säubern und gegebenenfalls zur Durchführung einer Bauteilnassreinigung vorher zusätzlich mit einer Reinigungsflüssigkeit zu benetzen.

Das zu reinigende Bauteil kann zum Beispiel ein Fahrzeug-Karosseriebauteil sein mit mindestens einer hinsichtlich der aufzubringenden Anpresskraft definiert zu reinigenden Fläche. Beispielsweise können in Rahmenaußenbereichen, das heißt in Bereichen sogenannter "A-, B- oder C-Säulen", mit Lackfolien zu versehende und zuvor lackierte Fahrzeugtüren vor der Lackfolienapplikation mittels der Reinigungsvorrichtung betriebsgünstig gereinigt werden. Ferner lassen sich Dichtungssitzflächen von Karosseriebauteilen vor Aufbringen eines entsprechenden Dichtbandes oder auch Klebeflächen vorbereitend mittels der Reinigungsvorrichtung effektiv reinigen, wobei aufgrund der flexiblen Ausgestaltbarkeit der Reinigungsvorrichtung und insbesondere des Reinigungskopfes praktisch keine Beschränkungen in Bezug auf die reinigbare Bauteilgeometrie vorliegen. Eine als Roboter ausgebildete Reinigungsvorrichtung kann vorteilhaft mit weiteren Bearbeitungs- beziehungsweise Montagevorrichtungen einer Produktionsanlage kombiniert werden oder nach Anbringen eines geeigneten Bearbeitungskopfes auch zur Durchführung eines anderen, reinigungsfremden Bearbeitungsschritts herangezogen werden.

Weitere Vorteile der Erfindung ergeben sich aus der Beschreibung.

Die Erfindung wird anhand eines bevorzugten Ausführungsbeispiels unter Bezugnahme auf eine schematische Zeichnung näher erläutert.

Dabei zeigen:
- Fig. 1: eine schematische Perspektivdarstellung einer erfindungsgemäßen Reinigungsvorrichtung und eines zu reinigenden Bauteils;
- Fig. 2: eine schematische Perspektivdarstellung eine Details der Reinigungsvorrichtung der Figur 1 in vergrößertem Maßstab;
- Fig. 3: eine schematische Perspektivdarstellung eines teilweise mit einem Reinigungselement versehenen Reinigungskopfes der Reinigungsvorrichtung der Figur 1 in vergrößertem Maßstab;
- Fig. 4: eine schematische Perspektivdarstellung des mit dem Reinigungselement versehenen Reinigungskopfes der Figur 3 in Anlagekontakt mit dem Bauteil und
- Fig. 5: eine weitere Perspektivdarstellung des mit dem Reinigungselement versehenen Reinigungskopfes in Anlagekontakt mit dem Bauteil.

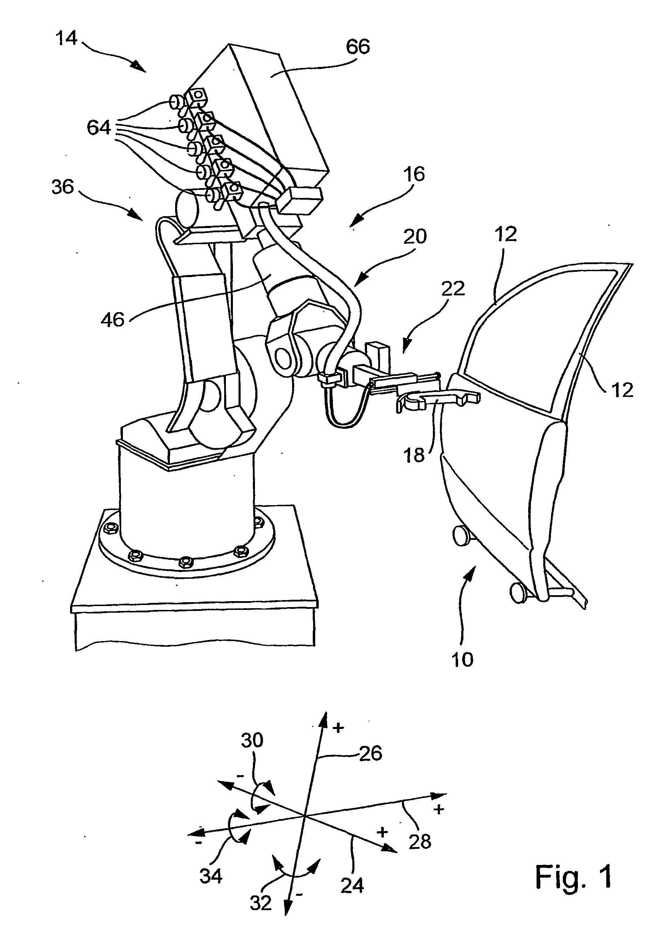

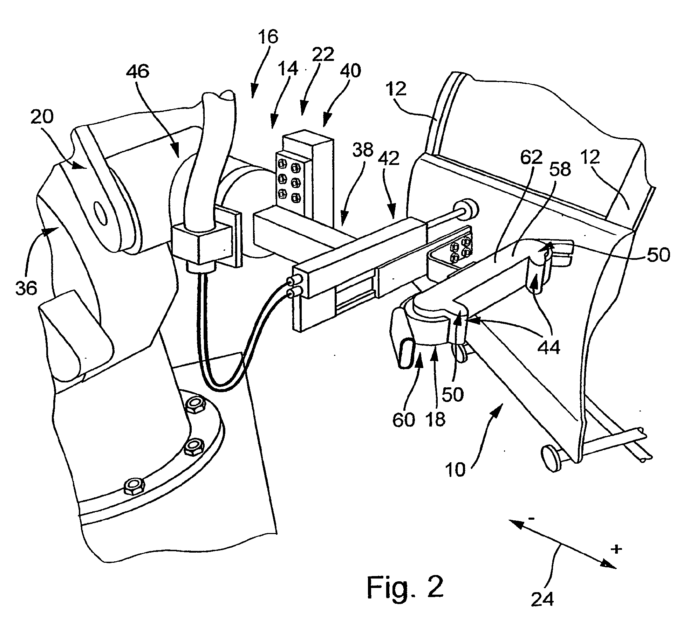

Die Figuren 1 und 2 zeigen in schematischer Darstellung eine Reinigungsvorrichtung 14 zum Reinigen einer Fläche 12 eines Bauteils 10. Im vorliegenden Ausführungsbeispiel ist das Bauteil 10 ein Fahrzeug-Karosseriebauteil in Form einer Fahrzeugtür, deren zu reinigenden Flächen 12 durch den Fensterrahmen gebildet werden. Insbesondere sollen mittels der Reinigungsvorrichtung 14 die Außenfläche auf der Vorderseite der sogenannten "A- und B-Säulen" beziehungsweise "B- und C-Säulen" einer Fahrzeugtür sowie die sich hieran anschließenden Umbugbereiche, die auf der Rückseite der Fahrzeugtür liegen, gereinigt beziehungsweise entstaubt werden. Der Reinigungsvorgang dieser Bereiche einer Fahrzeugtür kann zum Beispiel eine Bauteilvorbereitung zu einer anschließenden Lackfolienapplikation darstellen. Zur Bauteilreinigung weist die Reinigungsvorrichtung 14 einen mittels einer Positioniereinrichtung 16 bewegbaren Reinigungskopf 18 auf, der mit dem Bauteil 10 beziehungsweise mit dessen zu reinigenden Flächen 12 in Reinigungskontakt zu bringen ist unter Ausbildung einer in der Regel die Reinigungswirkung beeinflussenden Anpresskraft .

Die Positioniereinrichtung 16, die Teil eines Roboters 36 beziehungsweise Industrieroboters ist, enthält ein Grobpositioniersystem 20 und ein Feinpositioniersystem 22. Das Grobpositioniersystem 20 ist als automatisiert bewegbarer Roboterarm 46 mit sechs automatisiert bewegbaren Achsen ausgebildet, an dessen freien Ende das Feinpositioniersystem 22 befestigt ist, das den Reinigungskopf 18 trägt. Der Reinigungskopf 18 ist beispielsweise mittels eines Bajonettverschlusssystems (nicht in den Figuren dargestellt) austauschbar am Feinpositioniersystem 22 befestigt. Das Grobpositioniersystem 20 dient zur räumlichen Grobpositionierung des Reinigungskopfes 18 in Bezug auf das Bauteil 10, wobei der Reinigungskopf 18 in der Regel noch nicht mit dem Bauteil 10 in Berührungskontakt gebracht wird. Zur Herstellung eines für den Reinigungsvorgang erwünschten Berührungskontakts kann nun eine sich an die Grobpositionierung des Roboterarms 46 anschließende Bewegung des Reinigungskopfes 18 mittels des Feinpositioniersystems 22 relativ zum Roboterarm 46 erfolgen. Diese Bewegung im Rahmen einer Feinpositionierung des Reinigungskopfes 18 erfolgt in mindestens einer möglichen Bewegungsrichtung 24, 26, 28, 30, 32, 34 kraftgesteuert. Beim vorliegenden Ausführungsbeispiel sind Bewegungen des Reinigungskopfes 18 entlang der Bewegungsachsen in "+/-" Richtung gemäß den Doppelpfeilen 24, 26, 28 mittels des Feinpositioniersystems 22 kraftgesteuert, während die Bewegungen um die Drehachsen gemäß den Doppelpfeilen 30, 32, 34 mittels des Grobpositioniersystems (Roboterarm 46) ausschließlich weggesteuert sind. Die drei Bewegungsachsen 24, 26, 28 stehen im Wesentlichen orthogonal zueinander und sind in Figur 1 in Bezug auf die gezeigte Betriebsposition des Roboterarms 46 perspektivisch dargestellt. Das Feinpositioniersystem 22 ist als maximalkraftbegrenzte Funktionseinheit ausgebildet, wobei es hierzu für die bauteilkollisionsrelevante Bewegungsrichtungen 24, 26, 28 des Reinigungskopfes 18 ein jeweils zugeordnetes Feinpositionierelement 38, 40, 42 aufweist, so dass die sich jeweils zwischen dem Reinigungskopf 18 und der Bauteilfläche 12 während des Reinigungsvorgangs einstellende Anpresskraft bewegungsrichtungsspezifisch begrenzt ist.

Die Feinpositionierelemente 38, 40, 42 enthalten jeweils einen teleskopartigen Verstellmechanismus mit einem jeweils vorgegebenen Verstellweg. Der Reinigungskopf 18 ist mittels des Feinpositioniersystems 22 entlang der Bewegungsachsen 24, 26, 28 innerhalb eines definierten Toleranzfensters verschiebbar. Das Toleranzfenster ist dabei durch einen jeweils an die Reinigungsaufgabe angepassten Verstellweg des Feinpositioniersystems 22 vorgegeben und hinsichtlich seiner Maximalausdehnung begrenzt. Gegebenenfalls kann auch die Geometrie des Reinigungskopfes 18 eine zusätzliche Verstellwegeinschränkung des Reinigungskopfes 18 darstellen, nämlich für den Fall, dass der Reinigungskopf 18 mit einer weiter unten eingehender beschriebenen Anschlagfläche gegen das Bauteil 10 unter Ausbildung der Anpresskraft kollidiert, bevor der zugehörige teleskopartige Verstellmechanismus auf eine maximal mögliche Verstellweglänge ausgefahren worden ist. Die Feinpositionierelemente 38, 40, 42 sind hinsichtlich ihrer maximalen Verstellkraft unter Ausbildung einer jeweils erwünschten Anpresskraft variabel einstellbar. Dabei können die Feinpositionierelemente 38, 40, 42 eine pneumatische oder eine hydraulische Betätigungseinheit aufweisen.

Die jeweils einen teleskopartigen Verstellmechanismus aufweisenden Feinpositionierelemente 38, 40, 42 sind jeweils als Zylinder-Kolben-System ausgebildet, wobei eine Kolbenbewegung gemäß vorliegendem Ausführungsbeispiel vorzugsweise mittels Druckluft erfolgt. Die Steuerung beziehungsweise Regelung des Luftdrucks kann dabei stufenlos mittels eines in Bezug auf die jeweilige Bewegungsrichtung zugehörigen Proportionalventils erfolgen. Die Reinigungsvorrichtung 14 entsprechend Figur 1 enthält fünf Proportionalventile 64, die mittels eines Steuerungs- oder Regelungssystems 66 betätigbar sind und eine kraftgesteuerte Bewegung des Reinigungskopfes 18 in den "+/-" Richtungen 26, 28 sowie in "+" Richtung 24 ermöglichen. Zur Erfüllung der in den Figuren 1 bis 5 dargestellten Reinigungsaufgabe ist eine kraftgesteuerte Bewegung in "-" Richtung 24 nicht erforderlich (siehe insbesondere Figur 2), kann jedoch ebenfalls auf entsprechende Weise realisiert werden.

Der Reinigungskopf 18 weist für mindestens eine bauteilkontaktrelevante Bewegungsrichtung, im vorliegenden Ausführungsbeispiel für die Bewegungsrichtung 28, zwei voneinander beabstandete und gegenüberliegende Reinigungsanschlagflächen 44 auf, wobei das Feinpositionierelement 42 diesen Reinigungsanschlagflächen 44 funktionell zugeordnet ist. Ferner ist die Reinigungsvorrichtung 14 mit einer programmierbaren Steuerungs- und/oder Regelungseinrichtung versehen zur wenigstens teilweise automatisierten Positionierung des Reinigungskopfes 18 und zur entsprechenden Durchführung des eigentlichen Reinigungsvorgangs am Bauteil 10.

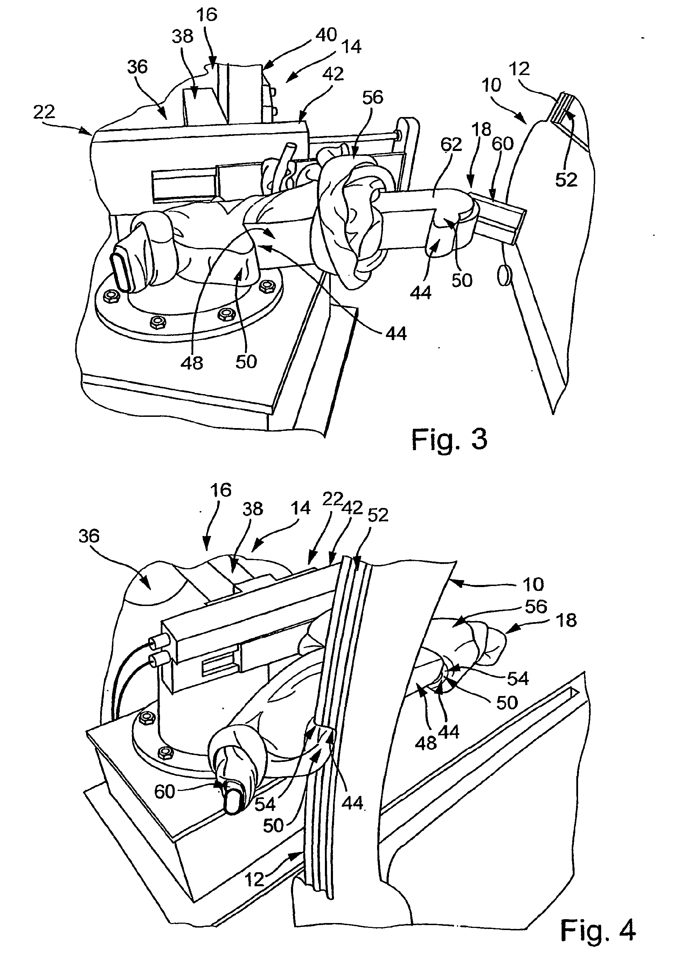

Der Reinigungskopf 18 enthält eine Trägerstruktur 60, an welcher ein Schaumstoffelement 62 befestigt ist, welches ein austauschbares Reinigungselement 56 in Form eines Mikrofasertuches trägt. Im vorliegenden Ausführungsbeispiel gemäß den Figuren 3 bis 5 ist der Reinigungskopf 18 mit einer sich dreidimensional erstreckenden Reinigungsfläche 48 versehen. Dabei weist er zwei voneinander beabstandete und gegenüberliegende Anschlagschultern 50 auf, die mit ihrer jeweiligen Reinigungsanschlagfläche 44 frontal an eine entsprechende Bauteilkante 52 bewegbar sind unter Ausbildung der Anpresskraft. Die Reinigungsfläche 48 ist hierzu im Wesentlichen U-förmig ausgebildet und enthält pro Anschlagschulter 50 eine mit einer Bauteilfläche 12 in Berührungskontakt bringbare Hinterschneidung 54. In Abhängigkeit der Reinigungsaufgabe kann der Reinigungskopf 18 gegebenenfalls mit einem zusätzlichen Saug- und/oder Blassystem (nicht in den Figuren dargestellt) versehen sein, beispielsweise mit Druckluft als Betriebsmedium.

Die Reinigungsvorrichtung 14 kann einen als Wechselmagazin ausgebildeten Speicher (nicht in den Figuren dargestellt) aufweisen zur Zwischenlagerung mindestens eines Reinigungskopfes 18 und/oder eines Reinigungselements 56. Ferner kann eine Reinigungskopf- und/oder Reinigungselement-Behandlungseinrichtung vorgesehen sein, so dass sowohl die Reinigungskopfvorbereitung als auch der Reinigungsvorgang an sich automatisiert durchführbar sind.

Die Bewegung des mit dem Bauteil 10 in Berührungskontakt stehenden Reinigungskopfes 18 kann mittels des Feinpositioniersystems 22 alleine oder bei Bedarf auch mittels gleichzeitiger Betätigung des Grobpositioniersystems 20 und des Feinpositioniersystems 22 erfolgen. Zur Reinigungsoptimierung ist die Anpresskraft variabel einstellbar. Dabei kann die Anpresskraft in Abhängigkeit einer veränderlich großen, aktiven Kontaktfläche des Reinigungskopfes 18 und/oder in Abhängigkeit eines Bauteilparameters vorgegeben werden. Hierbei wird unter "Kontaktfläche" derjenige Flächenanteil der Reinigungsfläche des Reinigungskopfes 18 verstanden, der unter Ausbildung der Anpresskraft mit dem zu reinigenden Bauteil 10 in Berührungskontakt steht. Ein möglicher Bauteilparameter, welcher zur Bestimmung eines erwünschten maximalen Anpresskraftwerts berücksichtigt werden sollte, ist die Eigenstabilität beziehungsweise die Nachgiebigkeit des Bauteils 10 insbesondere im Bereich der jeweils zu reinigenden Fläche 12, da hierdurch auch das Reinigungsergebnis beeinflusst werden kann. Somit kann es durchaus sinnvoll sein, auch in Abhängigkeit eines gegebenenfalls unterschiedlich starken Verschmutzungsgrads an den Bauteilflächen 12, verschieden große Anpresswerte während eines Reinigungsvorgangs vorzugeben, wobei die Änderung der Anpresskraft am Feinpositioniersystem 22 automatisiert oder manuell vor und/oder während des Reinigungsvorgangs erfolgen kann.

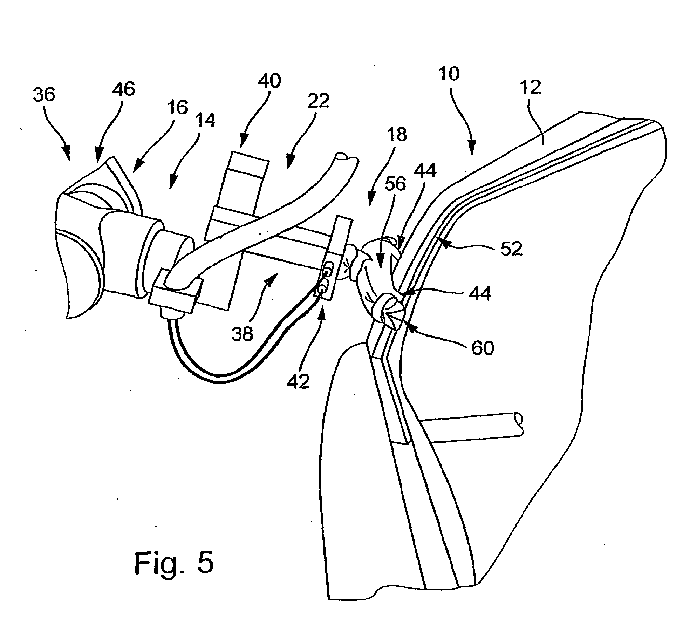

Die Funktionsweise der Reinigungsvorrichtung 14 kann zum Beispiel derart erfolgen, dass der an seinem freien Ende das Feinpositioniersystem 22 tragende Roboterarm 46 in einer Reinigungskopfwechselstation automatisiert mit einem geeigneten Reinigungskopf 18 bestückt wird. Der Roboterarm 46 bewegt nun als Grobpositioniersystem 20 den Reinigungskopf 18 in eine Ausgangsposition, aus welcher der Reinigungskopf 18 mittels des Feinpositionierelements 38 in Bewegungsrichtung 24 kraftgesteuert bewegt und somit mit dem Bauteil 10 in Berührungskontakt gebracht werden kann unter Ausbildung der Anpresskraft, wobei der erwünschte Anpresskraftwert zuvor dem Steuerungs- oder Regelungssystem 66 eingegeben wurde. Dabei wird das Feinpositionierelement 38 vorzugsweise nicht um die maximal mögliche Verfahrweglänge ausgefahren, so dass gegebenenfalls ein selbständiges Nachstellen des Reinigungskopfes 18 in Bewegungsrichtung 24 um die verbleibende Restverfahrweglänge unter Gewährleistung eines permanenten Berührungskontakts mit dem Bauteil 10 möglich ist. Das Feinpositionierelement 38 hat somit die Wirkung eines Federelements, jedoch ohne Federkennlinie, da unabhängig vom Verstellweg stets eine praktisch konstante Anpresskraft erzeugt wird. Nachdem der Berührungskontakt zwischen dem Reinigungskopf 18 und dem Bauteil 10 hergestellt worden ist, wird der Reinigungskopf 18 gemäß Figur 4 derart mittels des Feinpositionierelements 42 kraftgesteuert bewegt, bis er mit einer Reinigungsanschlagfläche 44 der entsprechenden Anschlagschulter 50 an eine zu reinigende Bauteilkante 52 (Umbugbereich der B-Säule) stößt unter Ausbildung der für das Feinpositionierelement 42 vorgegebenen Anpresskraft. Der Reinigungskopf 18 wird anschließend mittels des Feinpositionierelements 42 und/oder mittels des Roboterarms 46 entlang der B-Säule bewegt (siehe insbesondere Figur 5), wobei sowohl die vorderseitige Kontaktfläche 12 als auch die Bauteilkante 52 (Umbugbereich) gleichzeitig gereinigt werden. Gegebenenfalls können während des Reinigungsvorgangs auch zusätzliche Behandlungsschritte für den Reinigungskopf 18 vorgesehen sein. Entscheidend bei diesem Reinigungsvorgang ist, dass alle auftretenden Anpresskräfte mittels eines jeweils zugehörigen Feinpositionierelements erzeugt werden und somit größenmäßig vorbestimmt sind.

Im vorliegenden Ausführungsbeispiel kann der Reinigungskopf 18 mittels des Feinpositioniersystems 22 pro Bewegungsrichtung 24, 26, 28 innerhalb eines Toleranzfensters von ca. +/-25 mm bewegt werden. Auch wenn der Reinigungskopf mittels des Grobpositioniersystems 20 entlang einer an die Bauteilkontur angepassten, vorgegebenen Bahn bewegt wird, kann aufgrund des Feinpositioniersystems 22 auf eine relativ aufwendige Sensortechnik zur geeigneten Positionierung des Reinigungskopfes 18 am Bauteil 10 unter Ausbildung einer Anpresskraft verzichtet werden.

Der weitere konstruktive Aufbau und die Funktionsweise der Reinigungsvorrichtung sind an sich bekannt, so dass diesbezüglich auf eine eingehendere Beschreibung verzichtet wird.

## Patentansprüche

1. Verfahren zum Reinigen mindestens einer Fläche (12) eines Bauteils (10) unter Einsatz einer Reinigungsvorrichtung (14), wobei die Bauteilfläche (12) mittels eines von einer Positioniereinrichtung (16) bewegbaren Reinigungskopfes (18) gereinigt wird unter Ausbildung einer Anpresskraft des Reinigungskopfes (18) auf das Bauteil (10), wobei die Positioniereinrichtung (16) ein Grobpositioniersystem (20) und ein Feinpositioniersystem (22) aufweist, wobei der Reinigungskopf (18) mittels des Feinpositioniersystems (22) in mindestens einer Bewegungsrichtung (24, 26, 28, 30, 32, 34) kraftgesteuert bewegt wird, **dadurch gekennzeichnet , dass** der Reinigungskopf (18) eine sich dreidimensional erstreckende Reinigungsfläche (48) und mindestens eine Anschlagschulter (50) aufweist, die mit ihrer Reinigungsanschlagfläche (44) frontal an eine Bauteilkante (52) bewegbar ist unter Ausbildung der Anpresskraft, wobei der Reinigungskopf (18) entlang wenigstens einer Bewegungsachse (24, 26, 28) mittels des Feinpositioniersystems (22) innerhalb eines vorgebbaren Toleranzfensters bewegt wird.

2. Verfahren nach Anspruch 1,
**dadurch gekennzeichnet ,**
**dass** die Anpresskraft mittels des Feinpositioniersystems (22) hinsichtlich ihres Maximalwerts begrenzt ist.

3. Verfahren nach einem der vorhergehenden Ansprüche,
**dadurch gekennzeichnet ,**
**dass** die Bewegung des mit dem Bauteil (10) in Berührungskontakt stehenden Reinigungskopfes (18) mittels des Feinpositioniersystems (22) alleine oder mittels gleichzeitiger Betätigung des Grobpositioniersystems (20) und des Feinpositioniersystems (22) erfolgt.

4. Verfahren nach einem der vorhergehenden Ansprüche,
**dadurch gekennzeichnet ,**
**dass** zur Reinigungsoptimierung die Anpresskraft variabel einstellbar ist.

5. Verfahren nach einem der vorhergehenden Ansprüche,
**dadurch gekennzeichnet ,**
**dass** die Anpresskraft in Abhängigkeit einer veränderlich großen, aktiven Kontaktfläche des Reinigungskopfes (18) und/oder in Abhängigkeit eines Bauteilparameters vorgegeben wird.

6. Verfahren nach einem der vorhergehenden Ansprüche,
**dadurch gekennzeichnet ,**
**dass** die Änderung der Anpresskraft am Feinpositioniersystem (22) automatisiert oder manuell vor und/oder während des Reinigungsvorgangs erfolgt.

7. Verfahren nach einem der vorhergehenden Ansprüche,
**dadurch gekennzeichnet ,**
**dass** der Reinigungskopf (18) manuell mittels eines Manipulators als Positioniereinrichtung (16) oder automatisiert mittels eines Roboters (36) als Positioniereinrichtung (16) bewegt wird.

8. Reinigungsvorrichtung, insbesondere zur Durchführung des Verfahrens nach einem der vorhergehenden Ansprüche, wobei die Reinigungsvorrichtung (14) zum Reinigen mindestens einer Fläche (12) eines Bauteils (10) dient und einen mittels einer Positioniereinrichtung (16) bewegbaren Reinigungskopf (18) aufweist, wobei die Positioniereinrichtung (16) ein Grobpositioniersystem (20) und ein Feinpositioniersystem (22) aufweist, wobei die Bewegung des Reinigungskopfes (18) mittels des Feinpositioniersystems (22) wenigstens in einer Bewegungsrichtung (24, 26, 28, 30, 32, 34) kraftgesteuert ist,
**dadurch gekennzeichnet,**
**dass** der Reinigungskopf (18) eine sich dreidimensional erstreckende Reinigungsfläche (48) aufweist und mindestens eine Anschlagschulter (50) aufweist, die mit ihrer Reinigungsanschlagfläche (44) frontal an eine Bauteilkante (52) bewegbar ist unter Ausbildung der Anpresskraft, wobei mittels des Feinpositioniersystems (22) der Reinigungskopf (18) entlang mindestens einer Bewegungsachse (24, 26, 28) innerhalb eines vorgegebenen Toleranzfensters verschiebbar ist.

9. Reinigungsvorrichtung nach Anspruch 8,
**dadurch gekennzeichnet, dass** das Feinpositioniersystem (22) als maximalkraftbegrenzte Funktionseinheit ausgebildet ist.

10. Reinigungsvorrichtung nach Anspruch 8 oder 9,
**dadurch gekennzeichnet,**
**dass** das Toleranzfenster durch den maximalen Verstellweg des Feinpositioniersystems (22) und/oder durch die Geometrie des Reinigungskopfes (18) definiert ist.

11. Reinigungsvorrichtung nach einem der Ansprüche 8 bis 10,
**dadurch gekennzeichnet, dass** das Feinpositioniersystem (22) für mehrere bauteilkollisionsrelevante Bewegungsrichtungen (24, 26, 28) des Reinigungskopfes (18) ein jeweils zugeordnetes Feinpositionierelement (38, 40, 42) aufweist zur bewegungsrichtungsspezifischen Vorgabe der Anpresskraft.

12. Reinigungsvorrichtung nach Anspruch 11,
**dadurch gekennzeichnet, dass** das Feinpositionierelement (38, 40, 42) einen Teleskopverstellmechanismus aufweist.

13. Reinigungsvorrichtung nach Anspruch 11 oder 12,
**dadurch gekennzeichnet, dass** das Feinpositionierelement (38, 40, 42) hinsichtlich seiner maximalen Verstellkraft unter Ausbildung der Anpresskraft variabel einstellbar ist.

14. Reinigungsvorrichtung nach einem der Ansprüche 11 bis 13,
**dadurch gekennzeichnet, dass** das Feinpositionierelement (38, 40, 42) eine pneumatische oder eine hydraulische Betätigungseinheit aufweist.

15. Reinigungsvorrichtung nach einem der Ansprüche 8 bis 14,
**dadurch gekennzeichnet, dass** der Reinigungskopf (18) mittels des Feinpositioniersystems (22) entlang drei zueinander im Wesentlichen orthogonal stehender Bewegungsachsen (24, 26, 28) lageverstellbar ist.

16. Reinigungsvorrichtung nach einem der Ansprüche 8 bis 15,
**dadurch gekennzeichnet, dass** der Reinigungskopf (18) um mindestens eine Drehachse (30, 32, 34) drehbewegbar ist.

17. Reinigungsvorrichtung nach einem der Ansprüche 11 bis 16,
**dadurch gekennzeichnet, dass** der Reinigungskopf (18) für mindestens eine bauteilkontaktrelevante Bewegungsrichtung (24, 26, 28) eine Reinigungsanschlagfläche (44) mit einem zugehörigen Feinpositionierelement (42) aufweist.

18. Reinigungsvorrichtung nach einem der Ansprüche 8 bis 17,
**dadurch gekennzeichnet, dass** der Reinigungskopf (18) austauschbar am Feinpositioniersystem (22) befestigt ist.

19. Reinigungsvorrichtung nach einem der Ansprüche 8 bis 18,
**dadurch gekennzeichnet, dass** sie als Manipulatoreinrichtung oder als Roboter (36) ausgebildet ist.

20. Reinigungsvorrichtung nach einem der Ansprüche 8 bis 19,
**dadurch gekennzeichnet, dass** die Grobpositioniereinrichtung (20) einen bewegbaren Roboterarm (46) aufweist, an dessen freien Ende das Feinpositioniersystem (22) befestigt ist, das den Reinigungskopf (18) trägt.

21. Reinigungsvorrichtung nach Anspruch 19 oder 20,
**dadurch gekennzeichnet, dass** sie eine programmierbare Steuereinrichtung und/oder Regelungseinrichtung aufweist zur wenigstens teilweise automatisierten Positionierung des Reinigungskopfes (18) und Reinigung des Bauteils (10).

22. Reinigungsvorrichtung nach einem der Ansprüche 8 bis 21,
**dadurch gekennzeichnet, dass** die Reinigungsfläche (48) im Wesentlichen U- oder L-förmig ausgebildet ist.

23. Reinigungsvorrichtung nach einem der Ansprüche 8 bis 22,
**dadurch gekennzeichnet, dass** die Reinigungsfläche (48) mindestens eine mit einer Bauteilfläche (12) in Berührungskontakt bringbare Hinterschneidung (54) aufweist.

24. Reinigungsvorrichtung nach einem der Ansprüche 8 bis 23,
**dadurch gekennzeichnet, dass** der Reinigungskopf (18) an seiner Bauteilkontaktseite mit mindestens einem austauschbaren Reinigungselement (56) versehen ist.

25. Reinigungsvorrichtung nach Anspruch 24,
**dadurch gekennzeichnet, dass** das Reinigungselement (56) ein Schwamm und/oder ein Borstenelement und/oder ein Tuch und insbesondere ein Mikrofasertuch ist.

26. Reinigungsvorrichtung nach einem der Ansprüche 8 bis 25,
**dadurch gekennzeichnet,**
**dass** sie einen Speicher aufweist zur Zwischenlagerung mindestens eines Reinigungskopfes (18) und/oder mindestens eines Reinigungselements (56).

27. Reinigungsvorrichtung nach einem der Ansprüche 8 bis 26,
**dadurch gekennzeichnet, dass** sie eine Reinigungskopf- und/oder Reinigungselement-Behandlungseinrichtung aufweist.

28. Reinigungsvorrichtung nach einem der Ansprüche 8 bis 27,
**dadurch gekennzeichnet,**
**dass** das Bauteil (10) ein Fahrzeug-Karosseriebauteil ist mit mindestens einer hinsichtlich der aufzubringenden Anpresskraft definiert zu reinigenden Fläche (12).

## Claims

1. Method for cleaning at least one surface (12) of a component (10) using a cleaning device (14), the surface (12) of the component being cleaned by means of a cleaning head (18) which can be moved by a positioning device (16), while forming a contact pressure of the cleaning head (18) on the component (10), the positioning device (16) having a rough positioning system (20) and a fine positioning system (22) and the cleaning head (18) being moved in a force-controlled manner by means of the fine positioning system (22) in at least one direction of movement (24, 26, 28, 30, 32, 34), **characterized in that** the cleaning head (18) has a three-dimensionally extending cleaning surface (48) and at least one stop shoulder (50), which can be moved with its cleaning stop surface (44) frontally against a component edge (52), while forming the contact pressure, the cleaning head (18) being moved along at least one axis of movement (24, 26, 28) by means of the fine positioning system (22) within a predeterminable tolerance window.

2. Method according to Claim 1, **characterized in that** the contact pressure by means of the fine positioning system (22) is limited with regard to its maximum value.

3. Method according to one of the preceding claims, **characterized in that** the movement of the cleaning head (18) in contiguous contact with the component (10) takes place by means of the fine positioning system (22) alone or by means of simultaneous actuation of the rough positioning system (20) and the fine positioning system (22).

4. Method according to one of the preceding claims, **characterized in that**, to optimize cleaning, the contact pressure can be variably set.

5. Method according to one of the preceding claims, **characterized in that** the contact pressure is predetermined in dependence on an active contact surface of the cleaning head (18) of varying size and/or in dependence on a parameter of the component.

6. Method according to one of the preceding claims, **characterized in that** the changing of the contact pressure on the fine positioning system (22) take places in an automated or manual manner before and/or during the cleaning operation.

7. Method according to one of the preceding claims, **characterized in that** the cleaning head (18) is moved manually by means of a manipulator as the positioning device (16) or in an automated manner by means of a robot (36) as the positioning device (16).

8. Cleaning device, in particular for implementing the method according to one of the preceding claims, the cleaning device (14) serving for cleaning at least one surface (12) of a component (10) and having a cleaning head (18) which can be moved by means of a positioning device (16), the positioning device (16) having a rough positioning system (20) and a fine positioning system (22) and the movement of the cleaning head (18) being force-controlled by means of the fine positioning system (22) at least in one direction of movement (24, 26, 28, 30, 32, 34), **characterized in that** the cleaning head (18) has a three-dimensionally extending cleaning surface (48) and has at least one stop shoulder (50), which can be moved with its cleaning stop surface (44) frontally against a component edge (52), while forming the contact pressure, the cleaning head (18) being displaceable by means of the fine positioning system (22) along at least one axis of movement (24, 26, 28) within a predeterminable tolerance window.

9. Cleaning device according to Claim 8, **characterized in that** the fine positioning system (22) is formed as a functional unit with limited maximum force.

10. Cleaning device according to Claim 8 or 9,
**characterized in that** the tolerance window is defined by the maximum adjusting displacement of the fine positioning system (22) and/or by the geometry of the cleaning head (18).

11. Cleaning device according to one of Claims 8 to 10, **characterized in that** the fine positioning system (22) has for a number of directions of movement (24, 26, 28) of the cleaning head (18) that are relevant to component collision a respectively assigned fine positioning element (38, 40, 42) for predetermining the contact pressure specific to the direction of movement.

12. Cleaning device according to Claim 11, **characterized in that** the fine positioning element (38, 40, 42) has a telescopic adjusting mechanism.

13. Cleaning device according to Claim 11 or 12, **characterized in that** the fine positioning element (38, 40, 42) can be variably set with regard to its maximum adjusting force, while forming the contact pressure.

14. Cleaning device according to one of Claims 11 to 13, **characterized in that** the fine positioning element (38, 40, 42) has a pneumatic or hydraulic actuating unit.

15. Cleaning device according to one of Claims 8 to 14, **characterized in that** the cleaning head (18) is adjustable in its position by means of the fine positioning system (22) along three axes of movement (24, 26, 28) which are substantially orthogonal to one another.

16. Cleaning device according to one of Claims 8 to 15, **characterized in that** the cleaning head (18) can be moved rotatably about at least one axis of rotation (30, 32, 34).

17. Cleaning device according to one of Claims 11 to 16, **characterized in that** the cleaning head (18) has for at least one direction of movement (24, 26, 28) that is relevant to component contact a cleaning stop surface (44) with an associated fine positioning element (42).

18. Cleaning device according to one of Claims 8 to 17, **characterized in that** the cleaning head (18) is exchangeably fastened to the fine positioning system (22).

19. Cleaning device according to one of Claims 8 to 18, **characterized in that** it is formed as a manipulator device or as a robot (36) .

20. Cleaning device according to one of Claims 8 to 19, **characterized in that** the rough positioning device (20) has a movable robot arm (46), fastened to the free end of which is the fine positioning system (22), which carries the cleaning head (18).

21. Cleaning device according to Claim 19 or 20, **characterized in that** it has a programmable open-loop and/or closed-loop control device for the at least partially automated positioning of the cleaning head (18) and cleaning of the component (10).

22. Cleaning device according to one of Claims 8 to 21, **characterized in that** the cleaning surface (48) is formed in a substantially U-shaped or L-shaped manner.

23. Cleaning device according to one of Claims 8 to 22, **characterized in that** the cleaning surface (48) has at least one undercut (54), which can be brought into contiguous contact with a component surface (12) .

24. Cleaning device according to one of Claims 8 to 23, **characterized in that** the cleaning head (18) is provided on its component contact side with.at least one exchangeable cleaning element (56).

25. Cleaning device according to Claim 24, **characterized in that** the cleaning element (56) is a sponge and/or a brush element and/or a cloth, and in particular a microfibre cloth.

26. Cleaning device according to one of Claims 8 to 25, **characterized in that** it has a store for the intermediate storage of at least one cleaning head (18) and/or at least one cleaning element (56).

27. Cleaning device according to one of Claims 8 to 26, **characterized in that** it has a cleaning-head and/or cleaning-element handling device.

28. Cleaning device according to one of Claims 8 to 27, **characterized in that** the component (10) is a component of a vehicle body with at least one surface (12) to be cleaned in a defined manner with regard to the contact pressure to be applied.

## Revendications

1. Procédé de nettoyage d'au moins une surface (12) d'un élément de construction (10) sous utilisation d'un dispositif de nettoyage (14), la surface de l'élément de construction (12) étant nettoyée au moyen d'une tête de nettoyage mobile (18) à l'aide d'un dispositif de positionnement (16) par exercice d'une force de pression par la tête de nettoyage (18) sur l'élément de construction (10), le dispositif de positionnement (16) comportant un système de positionnement grossier (20) et un système de positionnement fin (22), la tête de nettoyage (18) étant déplacée par servocommande au moyen du système de positionnement fin (22) dans au moins une direction de déplacement (24, 26, 28, 30, 32, 34), **caractérisé en ce que** la tête de nettoyage (18) comporte une surface de nettoyage (48) s'étendant en trois dimensions et au moins un épaulement de butée (50), qui par sa surface de nettoyage à butée (44) est mobile par la face frontale contre une arête de l'élément de construction (52), sous exercice de la force de compression, la tête de nettoyage (18) étant déplacée le long d'au moins un axe de déplacement (24, 26, 28) au moyen du système de positionnement fin (22), à l'intérieur d'une fenêtre de tolérances prédéfinissable.

2. Procédé selon la revendication 1, **caractérisé en ce que** la force de pression est limitée dans sa valeur maximale au moyen du système de positionnement fin (22).

3. Procédé selon l'une quelconque des revendications précédentes, **caractérisé en ce que** le déplacement de la tête de nettoyage (18) qui est en contact avec l'élément de construction (10) est assuré uniquement au moyen du système de positionnement fin (22) ou par actionnement simultané du système de positionnement grossier (20) et du système de positionnement fin (22).

4. Procédé selon l'une quelconque des revendications précédentes, **caractérisé en ce que** pour l'optimisation du nettoyage, la force de pression est réglable de façon variable.

5. Procédé selon l'une quelconque des revendications précédentes, **caractérisé en ce que** la force de pression est prédéfinie en fonction d'une surface de contact active, de dimension variable de la tête de nettoyage (18) et/ou en fonction d'un paramètre concernant l'élément de construction.

6. Procédé selon l'une quelconque des revendications précédentes, **caractérisé en ce que** la modification de la force de pression sur le système de positionnement fin (22) est assurée de façon automatisée ou manuelle avant et/ou pendant le processus de nettoyage.

7. Procédé selon l'une quelconque des revendications précédentes, **caractérisé en ce que** la tête de nettoyage (18) est déplacée manuellement au moyen d'un manipulateur en tant que dispositif de positionnement (16) ou de façon automatisée, au moyen d'un robot (36) en tant que dispositif de positionnement (16).

8. Dispositif de nettoyage, notamment pour la réalisation du procédé selon l'une quelconque des revendications précédentes, le dispositif de nettoyage (14) étant destiné à nettoyer au moins une surface (12) d'un élément de construction (10) et comportant une tête de nettoyage (18) mobile au moyen d'un dispositif de positionnement (16), le dispositif de positionnement (16) comportant un système de positionnement grossier (20) et un système de positionnement fin (22), le déplacement de la tête de nettoyage (18) au moyen du système de positionnement fin (22) étant servocommandé dans au moins une direction de déplacement (24, 26, 28, 30, 32, 34),
**caractérisé en ce que** la tête de nettoyage (18) comporte une surface de nettoyage (48) s'étendant en trois dimensions et au moins un épaulement de butée (50), qui par sa surface de nettoyage à butée (44) est déplaçable par sa face frontale sur une arête de l'élément de construction (52), sous exercice de la force de pression, au moyen du système de positionnement fin (22), la tête de nettoyage (18) étant déplaçable le long d'au moins un axe de déplacement (24, 26, 28) à l'intérieur d'une fenêtre de tolérances prédéfinie.

9. Dispositif de nettoyage selon la revendication 8, **caractérisé en ce que** le système de positionnement fin (22) est conçu sous la forme d'un unité fonctionnelle à force maximale limitée.

10. Dispositif de nettoyage selon la revendication 8 ou 9, **caractérisé en ce que** la fenêtre de tolérances est définie par la course de réglage maximale du système de positionnement fin (22) et/ou par la géométrie de la tête de nettoyage (18).

11. Dispositif de nettoyage selon l'une quelconque des revendications 8 à 10, **caractérisé en ce que** le système de positionnement fin (22) comporte un élément de positionnement fin (38, 40, 42) respectivement associé à plusieurs directions de déplacement (24, 26, 28) de la tête de nettoyage (18) qui sont déterminantes pour la collision de l'élément de construction, pour la prédéfinition de la force de pression spécifique à la direction de déplacement.

12. Dispositif de nettoyage selon la revendication 11, **caractérisé en ce que** l'élément de positionnement fin (38, 40, 42) comporte un mécanisme de réglage télescopique.

13. Dispositif de nettoyage selon la revendication 11 ou 12, **caractérisé en ce que** l'élément de positionnement fin (38, 40, 42) est réglable de façon variable au niveau de sa force maximale de réglage sous exercice de la force de pression.

14. Dispositif de nettoyage selon l'une quelconque des revendications 11 à 13, **caractérisé en ce que** l'élément de positionnement fin (38, 40, 42) comporte une unité d'actionnement pneumatique ou une unité d'actionnement hydraulique.

15. Dispositif de nettoyage selon l'une quelconque des revendications 8 à 14, **caractérisé en ce que** la tête de nettoyage (18) est réglable en position au moyen du système de positionnement fin (22), le long de trois axes de déplacement (24, 26, 28) sensiblement orthogonaux l'un par rapport à l'autre.

16. Dispositif de nettoyage selon l'une quelconque des revendications 8 à 15, **caractérisé en ce que** la tête de nettoyage (18) est déplaçable en rotation autour d'au moins un axe de rotation (30, 32, 34).

17. Dispositif de nettoyage selon l'une quelconque des revendications 11 à 16, **caractérisé en ce que** la tête de nettoyage (18) comporte une surface de nettoyage à butée (44) avec un élément de positionnement correspondant (42) pour au moins une direction de déplacement (24, 26, 28) déterminante pour le contact avec l'élément de construction.

18. Dispositif de nettoyage selon l'une quelconque des revendications 8 à 17, **caractérisé en ce que** la tête de nettoyage (18) est fixée de façon interchangeable sur le système de positionnement fin (22).

19. Dispositif de nettoyage selon l'une quelconque des revendications 8 à 18, **caractérisé en ce qu'**il est conçu sous la forme d'un dispositif de manipulation ou sous la forme d'un robot (36) .

20. Dispositif de nettoyage selon l'une quelconque des revendications 8 à 19, **caractérisé en ce que** le dispositif de positionnement grossier (20) comporte un bras de robot mobile (46), sur l'extrémité libre duquel est fixé le système de positionnement fin (22) qui porte la tête de nettoyage (18).

21. Dispositif de nettoyage selon l'une quelconque des revendications 19 ou 20, **caractérisé en ce qu'**il comporte un dispositif de commande programmable et/ou un dispositif de régulation pour le positionnement au moins partiellement automatisé de la tête de nettoyage (18) et pour le nettoyage de l'élément de construction (10).

22. Dispositif de nettoyage selon l'une quelconque des revendications 8 à 21, **caractérisé en ce que** la surface de nettoyage (48) est sensiblement conçue sous la forme d'un U ou d'un L.

23. Dispositif de nettoyage selon l'une quelconque des revendications 8 à 22, **caractérisé en ce que** la surface de nettoyage (48) comporte au moins une contre-dépouille (54) pouvant être mise en contact avec une surface (12) de l'élément de construction.

24. Dispositif de nettoyage selon l'une quelconque des revendications 8 à 23, **caractérisé en ce que** sur sa face de contact avec l'élément de construction, la tête de nettoyage (18) est munie d'au moins un élément de nettoyage interchangeable (56).

25. Dispositif de nettoyage selon la revendication 24, **caractérisé en ce que** l'élément de nettoyage (56) est une éponge et/ou un élément en crin de brosse et/ou un chiffon et notamment un chiffon en microfibres.

26. Dispositif de nettoyage selon l'une quelconque des revendications 8 à 25, **caractérisé en ce qu'**il comporte un réservoir pour l'entreposage d'au moins une tête de nettoyage (18) et/ou d'au moins un élément de nettoyage (56).

27. Dispositif de nettoyage selon l'une quelconque des revendications 8 à 26, **caractérisé en ce qu'**il comporte un dispositif de traitement de la tête de nettoyage et/ou de l'élément de nettoyage.

28. Dispositif de nettoyage selon l'une quelconque des revendications 8 à 27, **caractérisé en ce que** l'élément de construction (10) est un élément de carrosserie d'un véhicule avec au moins un surface à nettoyer (12) de
